# EUROPEAN PATENT APPLICATION

(11) **EP 2 600 585 A1**
(43) Date of publication of application: **05.06.2013**
(21) Application number: 11777238.4
(22) Date of filing: 24.05.2011
(51) Int. Cl.: H04L 29/06

(54) **TIME MESSAGE PROCESSING METHOD, APPARATUS AND SYSTEM**

(30) Priority: 26.07.2010 CN 201010246659
(71) Applicant: Huawei Technologies Co., Ltd., Shenzhen, Guangdong 518129 (CN)
(72) Inventor: BI, Xiaoyu, Shenzhen Guangdong 518129 (CN); XIE, Lei, Shenzhen Guangdong 518129 (CN); CHEN, Jing, Shenzhen Guangdong 518129 (CN)
(74) Representative: Epping - Hermann - Fischer
(86) International application number: PCT/CN2011/074586
(87) International publication number: WO 2011/137819

(57) **Abstract**

A time message processing method, apparatus and system are provided by the embodiments of the present. The method includes: receiving a time message transmitted from a transmitter; determining whether the time message is an event message according to the identifier information in the time message, wherein the identifier information is the information carried in the field which is not encrypted with the Internet protocol security by the transmitter. With the method, apparatus and system provided by the embodiments of the present, after receiving the time message, the time message receiver can directly determine whether the time message is the event message according to the identifier information carried in the field which is not encrypted by the Internet protocol security in the time message, without any decryption, thereby solving the problem in the prior art that it cannot be determined whether the time message is an event message.

## Description

### Cross-Reference to Related Application

This application claims priority to a Chinese Patent Application No. 201010246659.7 filed to the State Intellectual Property Office of the P.R.C on July 26, 2010, which is hereby incorporated by reference in its entirety.

### Field of the Technology

The embodiments of the invention relate to the field of synchronization technology, and particularly, to a time message processing method, apparatus and system.

### Background

There are always the requirements of time synchronization or frequency synchronization in the communication network, and currently two modes are available for time synchronization or frequency synchronization: Network Time Protocol (NTP) and PTP (Precision Time Protocol). The PTP is the abbreviation of IEEE1588V2, which is a protocol proposed by the Institute of Electrical and Electronic Engineers (IEEE) for frequency synchronization in the packet network, and its full name is "precision clock synchronization protocol for networked measurement and control systems". For example, in the 3GPP Long Term Evolution (LTE) network, since the User Equipment (UE) needs to switch between eNBs, synchronization is required between the eNBs. In the Frequency Division Duplex (FDD) mode, frequency synchronization shall be kept between the eNBs, and both the PTP and the NTP can support frequency synchronization.

The NTP is a standard Internet protocol for time synchronization in the Internet. The purpose of the NTP is to synchronize the computer time to some time standards. The time synchronization means limiting the deviation of the time information maintained by various communication devices or computer devices in the network within a range small enough (e.g., 100 ms), and this process is referred to as time synchronization.

When IEEE1588V2 is employed for time synchronization between the eNB and the clock server, usually there are two connection modes between the eNB and the clock server: one is that the eNB directly establishes an Internet protocol security (IPsec) connection with the clock server, the other is that the eNB establishes an IPsec connection with the clock server through a Security Gateway (SGW).

In the prior art, when the system adopts the IPsec technology to perform an encryption of time synchronization or frequency synchronization for the PTP, the time message receiver may not determine whether a time message is an event message after receiving the time message.

### Summary

The embodiments of the present invention provide a time message processing method, apparatus and system, so as to solve the problem in the prior art that the time message receiver cannot determine whether a time message is an event message after receiving the time message.

The embodiments of the present invention provide a time message processing method, including:
receiving a time message transmitted from a transmitter; and
determining whether the time message is an event message according to identifier information in the time message, wherein the identifier information is the information carried in a field which is not encrypted with an Internet protocol security (IPsec) by the transmitter.

The embodiments of the present invention further provide a time message processing method, including:
carrying identifier information in a time message encrypted by an Internet protocol security (IPsec), wherein the identifier information is carried by a field of the time message which is not encrypted with the IPsec; and
transmitting the time message.

The embodiments of the present invention further provide a time message processing apparatus of a receiver, including:
a receiving module, configured to receive a time message; and
a determining module, configured to determine whether the time message received by the receiving module is an event message, according to identifier information carried in a field of the time message which is not encrypted by an Internet protocol security (IPsec).

The embodiments of the present invention further provide a time message processing apparatus of a transmitter, including:
a carrying module, configured to carry identifier information in a time message encrypted by an Internet protocol security (IPsec), wherein the identifier information is carried in a field of the time message which is not encrypted with the IPsec; and
a transmitting module, configured to transmit the time message processed by the carrying module.

The embodiments of the present invention further provide a time message processing system, comprising the aforementioned time message processing apparatus of the transmitter and the time message processing apparatus of the receiver.

In the method, apparatus and system provided by the embodiments of the present invention, the identifier information is carried in the field of the time message which is not encrypted with the IPsec. Thus, after receiving the time message, the receiver of the time message can directly determine whether the time message is an event message according to the identifier information without any decryption, thereby solving the problem that the receiver of the time message cannot determine whether the received time message is an event message.

### Brief Description of the Drawings

Fig. 1 illustrates a flowchart of Embodiment 1 of a time message processing method according to the present invention;
Fig. 2 illustrates a flowchart of Embodiment 2 of a time message processing method according to the present invention;
Fig. 3 illustrates a schematic diagram of an AAD format;
Fig. 4 illustrates a schematic diagram of another AAD format;
Fig. 5 illustrates a schematic diagram of an AAD format that carries a timestamp;
Fig. 6 illustrates a schematic diagram of an AAD format added with an algorithm identifier;
Fig. 7 illustrates a flowchart of Embodiment 3 of a time message processing method according to the present invention;
Fig. 8 illustrates a flowchart of time synchronization between an eNB and a clock server;
Fig. 9 illustrates a schematic diagram of a timestamp processing method according to an embodiment of the present invention;
Fig. 10 illustrates a schematic diagram of an ESP header format that carries message identifier information;
Fig. 11 illustrates a schematic diagram of an ESP header format that carries a timestamp;
Fig. 12 illustrates a flowchart of Embodiment 4 of a time message processing method according to the present invention;
Fig. 13 illustrates a schematic diagram of an ESP header having sub-formats;
Fig. 14 illustrates a schematic diagram of an ESP header that carries a timestamp and has sub-formats;
Fig. 15 illustrates a flowchart of Embodiment 5 of a time message processing method according to the present invention;
Fig. 16 illustrates a schematic diagram of an IPv6 extended header format that carries a timestamp;
Fig. 17 illustrates a schematic diagram of another IPv6 extended header format that carries a timestamp;
Fig. 18 illustrates a flowchart of Embodiment 6 of a time message processing method according to the present invention;
Fig. 19 illustrates a flowchart of Embodiment 8 of a time message processing method according to the present invention;
Fig. 20 illustrates a flowchart of Embodiment 9 of a time message processing method according to the present invention;
Fig. 21 illustrates a flowchart of Embodiment 10 of a time message processing method according to the present invention;
Fig. 22 illustrates a flowchart of Embodiment 11 of a time message processing method according to the present invention;
Fig. 23 illustrates a flowchart of Embodiment 12 of a time message processing method according to the present invention;
Fig. 24 illustrates a structure diagram of an embodiment of a time message processing apparatus of a transmitter according to the present invention;
Fig. 25 illustrates a structure diagram of an Embodiment of a time message processing apparatus of a receiver according to the present invention.

### Detailed Description

In the embodiments of the present invention, the PTP is taken as an example to illustrate a secure processing method when time synchronization is protected through IPsec, wherein the event message is not limited to the PTP event message, i.e., not limited to the event message protocol in the PTP, and it may be any event message in the protocol that satisfies the conditions and carries time information, such as NTP.

The implementations of the embodiments of the present invention are detailedly described as follows, mainly by taking two scenarios as examples: one is that the eNB directly establishes an IPsec connection with the clock server, the other is that the eNB establishes an IPsec connection with the clock server through an SGW.

### Scenario 1: the eNB establishes an IPsec connection with the clock server through the SGW

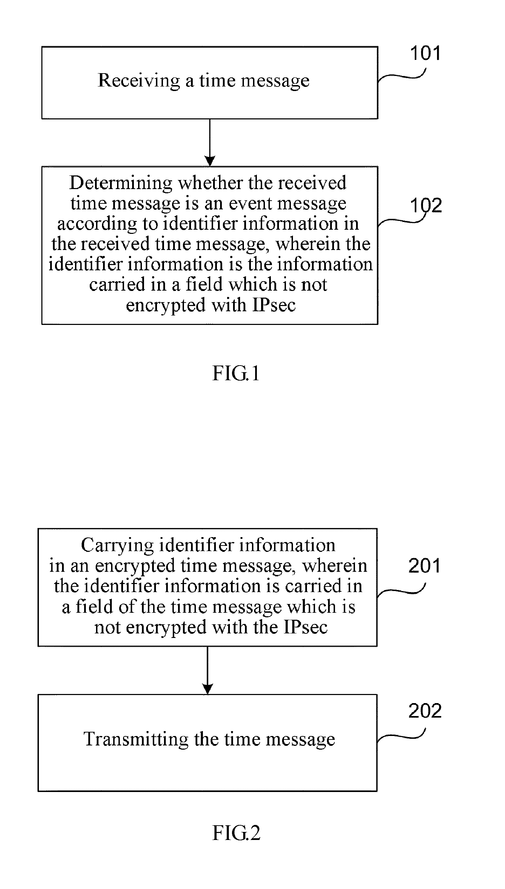

Fig. 1 illustrates a flowchart of Embodiment 1 of a time message processing method according to the present invention, including:
Step 101: receiving a time message transmitted from a transmitter. In the embodiment of the present invention, the time message is a message used by the system for time synchronization or frequency synchronization. The transmitter may be the SGW or the eNB.
   In a case where the eNB directly establishes an IPsec connection with the clock server, the transmitter may be the clock server or the eNB.
Step 102: determining whether the received time message is an event message according to identifier information therein. The identifier information is the information of the transmitter carried by the field which is not encrypted with the IPsec.

The identifier information at least may include one of a timestamp, a User Datagram Protocol (UDP) port number and a message type.

In step 102, it can be specifically determined whether the received time message is an event message according to the information such as the timestamp, the UDP port number and the message type.

If the identifier information of the time message includes a timestamp, the receiver of the time message can determine that the time message is an event message.

Alternatively, if the identifier information of the time message includes a preset UDP port number, the receiver of the time message can determine that the time message is an event message. The transmitter and the receiver of the time message may negotiate in advance to set UDP port numbers (e.g., 319 and 320) corresponding to the event message. Thus, after receiving the time message, if the receiver of the time message notes that the UDP port number in the unencrypted field of the time message is 319, then it can determine that the time message is an event message.

Alternatively, if the identifier information of the time message includes a preset message type, the receiver of the time message determines that the time message is an event message. The transmitter and the receiver of the time message may negotiate in advance to set message types corresponding to the event message. After receiving the time message, if the receiver of the time message notes that the message type in the unencrypted field of the time message is the preset message type, then it can determine that the time message is an event message.

In this embodiment, the identifier information is carried in the field of the time message, which is not encrypted with the IPsec. Thus, after receiving the time message, the receiver of the time message can directly determine whether the time message is an event message according to the identifier information, without any decryption, thereby solving the problem that the receiver of the time message cannot determine whether the received time message is an event message.

On the basis of the technical solution of the embodiment as illustrated in Fig. 1, the method may further include the step: if the received time message is an event message, acquiring the current timing and taking it as the timing of receiving the time message.

In this embodiment, it is determined in step 102 whether the received time message is an event message, and if so, acquiring the current timing and taking it as the timing of receiving the time message, rather than acquiring receiving timings of all the received time messages. After receiving the time message, it takes very short time to determine whether the time message is an event message according to the identifier information. Thus, after determining that the received time message is an event message, by immediately acquiring the current timing and taking it as the timing of receiving the time message, the acquired current timing approximates to the actual receiving timing of the time message, thereby meeting the accuracy requirement for subsequent frequency synchronization or time synchronization. Therefore, it only needs to acquire the receiving timing of the event message rather than acquiring receiving timings of all the received time messages, thereby reducing the resources required for storing and maintaining the receiving timing of the time message, and improving the network performance.

On the basis of the technical solution of the aforementioned embodiment, the method may further include the step: if the received time message is not an event message, the current timing needs not to be acquired, i.e., it is unnecessary to acquire the receiving timing of the time message, thereby reducing the resources required for storing and maintaining the receiving timing of the time message, and improving the network performance.

Alternatively, after receiving the time messages, receiving timings of all the time messages are temporarily recorded. After it is determined that a time message is an event message, the receiving timings of the time messages which are not event messages are immediately discarded, thereby ensuring the accuracy of the receiving timing, reducing the resources required for storing and maintaining the receiving timing when a time message is not an event message, and improving the network performance.

In the embodiment of the present invention, integrity checks may be carried out for the received time message and the identifier information in the time message.

Specifically, after determining that a time message is an event message and before acquiring the current timing, the integrity for the identifier information in the time message is checked. Alternatively, after receiving a time message transmitted from the transmitter and before determining whether the time message is an event message, the integrity for the identifier information in the time message is checked.

After determining that the time message is an event message and before acquiring the current timing, the integrity check for the time message is performed by using the input content the same as that employed by the transmitter of the time message for an integrity protection of the time message. Alternatively, after receiving the time message transmitted from the transmitter and before determining whether the time message is an event message, the integrity check for the time message is performed by using the input content the same as that employed by the transmitter of the time message for an integrity protection of the time message.

In various embodiments of the present invention, the field which is not encrypted with the IPsec may be carried in Additional Authentication Data (AAD), Encapsulating Security Payload (ESP) header or Internet protocol version 6 (IPv6) extended header.

Fig. 2 illustrates a flowchart of Embodiment 2 of a time message processing method according to the present invention, including:
Step 201: carrying identifier information in a time message encrypted with the IPsec, the identifier information being carried by a field which is not encrypted with the IPsec in the time message.
Step 202: transmitting the time message.

In various embodiments of the present invention, the identifier information is a plaintext not encrypted with the IPsec, and can be carried by the field not encrypted with the IPsec, such as AAD, ESP header and IPv6 extended header of the time message.

The following embodiment of the present invention is described through an example in which the identifier information is a timestamp.

### 1. The identifier information not encrypted with the IPsec is carried in the AAD

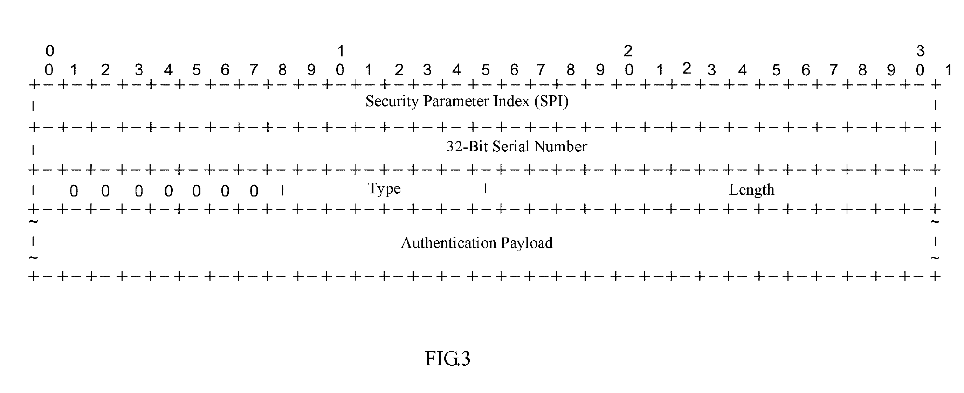

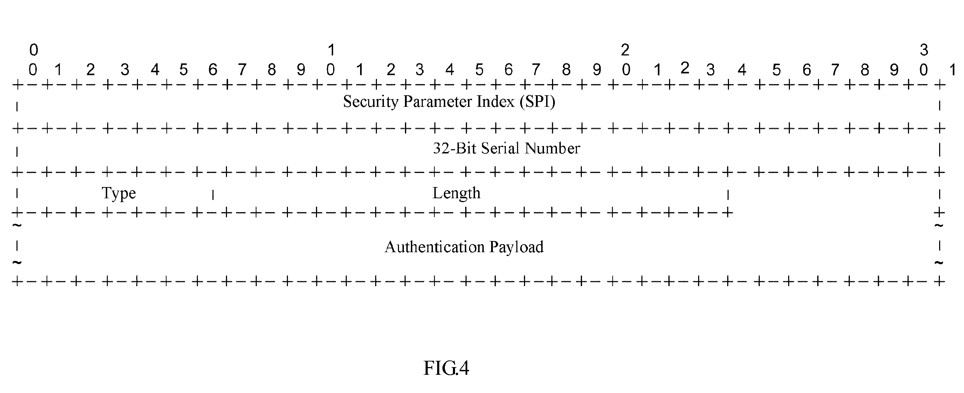

Fig. 3 illustrates a schematic diagram of an AAD format, and Fig. 4 illustrates a schematic diagram of another AAD format. In the AAD, the security parameter index (SPI) and the Sequence Number (SQN) are the contents contained by the ESP payload in RFC4303, for security association identification and anti-replay protection. The SQN has 32 bits and may be extended to 64 bits. The fields "Type" and "Length" indicate the type and the length of the identifier information in the AAD which is not encrypted with the IPsec, respectively. The AAD carrying the identifier information may be distinguished from other AAD withnot carrying the identifier information through one byte of 0 or 1, or a new AAD format may be defined directly.

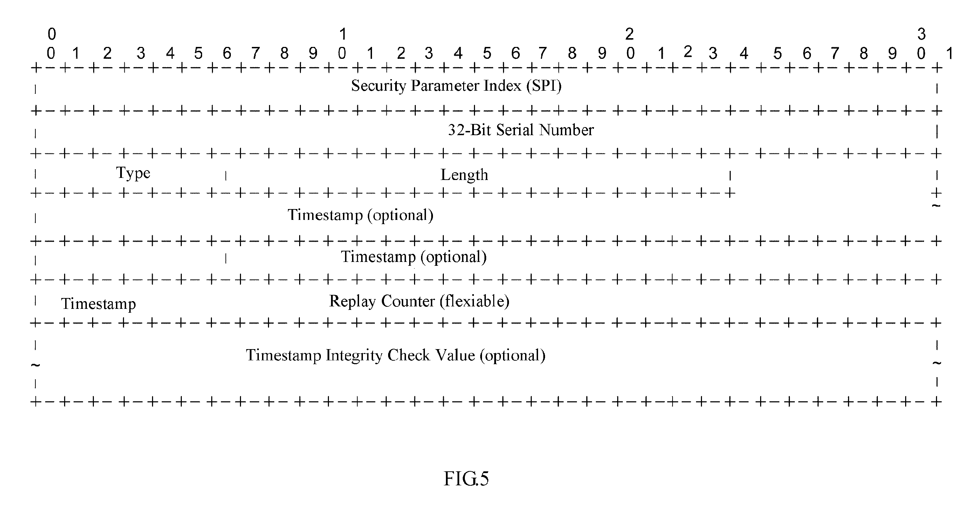

Fig. 5 illustrates a schematic diagram of an AAD format that carries a timestamp. On the basis of the AAD format as illustrated in Fig. 4, the AAD is added with a timestamp field, a replay counter, and a Timestamp Integrity Check Value (ICV) field.

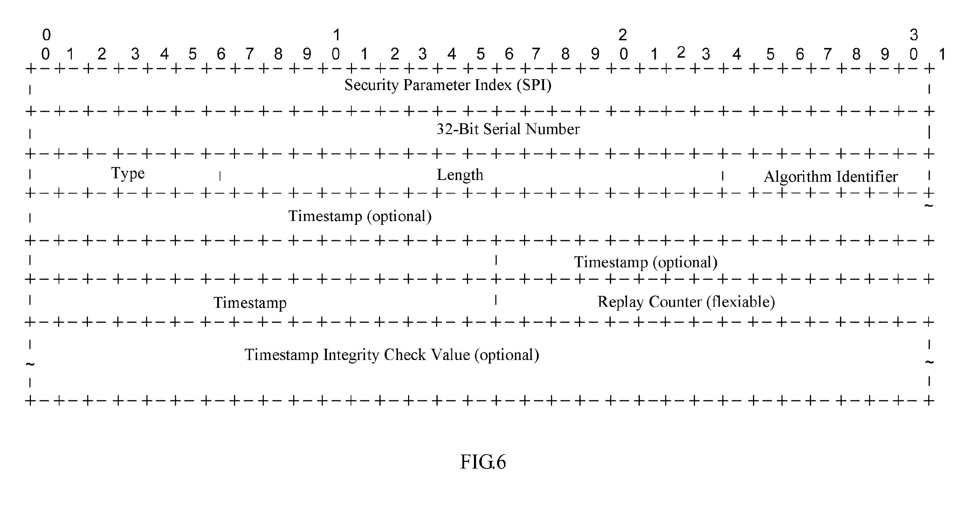

In order to prevent the timestamp from being tampered during the transmission, an integrity protection of the timestamp is required, wherein other added information may be included, such as all 0, all 1, length, etc. The algorithm negotiated by the IPsec may act as a timestamp integrity check algorithm, or one field may be added to the AAD to carry the used integrity check algorithm. For example, the check algorithm may calculate a hash value based message authentication code (HMAC-SHA1) using a hash function SHA1, calculate a hash value based message authentication code (HMAC-SHA256) using a hash function SHA256, or carry the algorithm ID in the AAD. Fig. 6 illustrates a schematic diagram of an AAD format added with an algorithm ID.

The ICV of the timestamp can be calculated according to the determined integrity check algorithm and key, specifically, the transmitter takes the determined key and the content in the AAD except the ICV as the input, calculate a digest by the determined integrity algorithm, and put the calculated digest in the ICV. The ICV shall be reset before the calculation. The receiver uses the same integrity check algorithm and key to calculate the digest, and compares the calculation result with the ICV in the received message. If they are consistent with each other, it means that the timestamp integrity check succeeds; otherwise it means that the timestamp has been modified and the receiver shall send an error indication or discard the received message.

Alternatively, other timestamp integrity check method may also be used, for example, some non-key check methods may be employed.

An integrity check of other identifier information may also be made using a method similar to the timestamp integrity check.

In Figs. 5-6, the timestamp may include two sub-fields: Timestamp (secondsField) and Timestamp (nanosecondsField), which are both optional. When the timestamp is needed to be carried, the two sub-fields may be included in the AAD. Timestamp (secondsField) is a 32-bit unsigned integer, and Timestamp (nanosecondsField) is defined as a 48-bit unsigned integer in IEEE1588V2 protocol, but Timestamp (nanosecondsField) may also be defined as 64-bit.

The Algorithm ID field is the identification of the employed integrity check algorithm, and the location of the field may be not limited to that as illustrated in Fig. 6.

The Timestamp Integrity Check Value field means the value of the employed ICV.

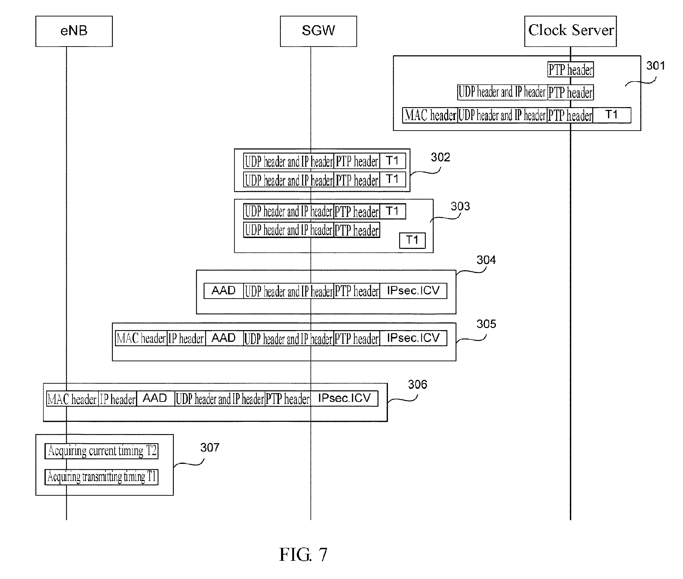

Fig. 7 illustrates a flowchart of Embodiment 3 of a time message processing method according to the present invention, wherein the identifier information not encrypted with the IPsec is carried by an AAD in the message. The method specifically includes:
Step 301: a clock server performs an IP layer processing for the message by adding an IP header and a UDP header thereto, then performs an MAC layer processing by adding an MAC header to the message, and carrying a transmitting timing T1 of the message in the message before performing a PHY layer processing.
Step 302: the clock server transmits the message to an SGW in form of plaintext.
Step 303: the SGW extracts or copies T1 from the received message.
Step 304: the SGW carries T1 in the AAD not encrypted with the IPsec in the message, and performs an integrity protection for T1, i.e., calculating an ICV of timestamp T1 and putting it in the Timestamp Integrity Check Value field, and then performing an integrity protection for the message, thus a check value of the message is calculated, as indicated by the IPsec.ICV field in Fig. 7. In this step, IPsec.ICV is an abbreviation of the IPsec Integrity Check Value.
   The SGW extracts T1 from the received message and carries T1 in the AAD without changing the bandwidth, but the message integrity is destroyed. If the SGW copies T1 from the received message, the message integrity will not be destroyed while the bandwidth is increased. Thus, the two ways for acquiring T1 both have their advantages and disadvantages.
Step 305: the SGW performs an MAC layer processing to add an MAC header to the message.
Step 306: the SGW transmits the message to an eNB.
Step 307: the eNB determines whether the received message is an event message based on the AAD not encrypted with the IPsec in the message, and if so, performs a timestamp integrity check or a message integrity check according to the information in the AAD and the IP packet, so as to acquire the current timing T2 and the transmitting timing T1 in the message, and take the current timing T2 as the timing of receiving the message. The eNB may also perform a timestamp integrity check and a message integrity check for the time message, after receiving the time message and before determining whether it is an event message.

After the timestamp integrity check and the message integrity check succeed, the eNB may perform frequency synchronization and time synchronization with the clock server according to T2 and T1.

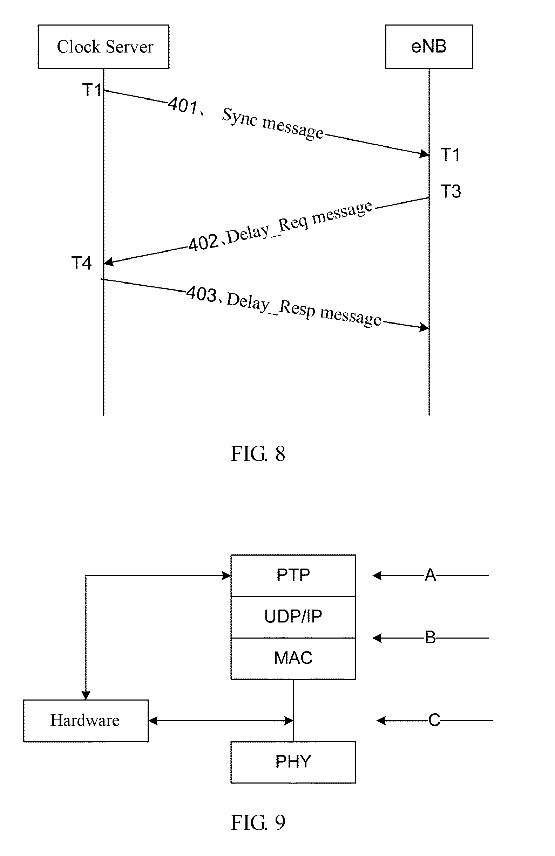

Fig. 9 illustrates a schematic diagram of a timestamp processing method according to an embodiment of the present invention. A timestamp is generated when a message passes through a point defined by a protocol stack in the node. The point may be located at the application layer (Point A in Fig. 9), the kernel or the interrupt service routine (Point B in Fig. 9), or the PHY layer of the protocol stack (Point C in Fig. 9). The timing error caused by a delay jitter occurring in passing through the next layer will be smaller when the point is closer to the PHY layer. In order to ensure the time accuracy, 1588v2 protocol recommends marking the timestamp at a location between the PHY layer and the MAC layer.

In the embodiment as illustrated in Fig. 7, message identifier information is carried in the message AAD, and the eNB can determine whether the message is an event message once it is received. When the message is an event message, the current timing is acquired and taken as the receiving timing of the message, rather than acquiring receiving timings of all messages, thereby improving the network performance.

### 2. The message identifier information not encrypted with the IPsec is carried in the ESP header

The ESP header includes two fields, i.e., SPI and SQN, which are under integrity protection while going beyond the scope of IPsec encryption protection. The identifier information may be carried in the ESP header. The ESP header carrying the identifier information should be distinguished from the conventional ESP header, and the ESP header carrying the identifier information may be identified by various specific identifiers such as all 0 byte, all 1 byte, etc. Since the identifier information may be other identifiers such as UDP port number, message type, etc. in addition to the timestamp, the fields Type, Length and Authentication Payload can be defined in the extended field of the ESP header.

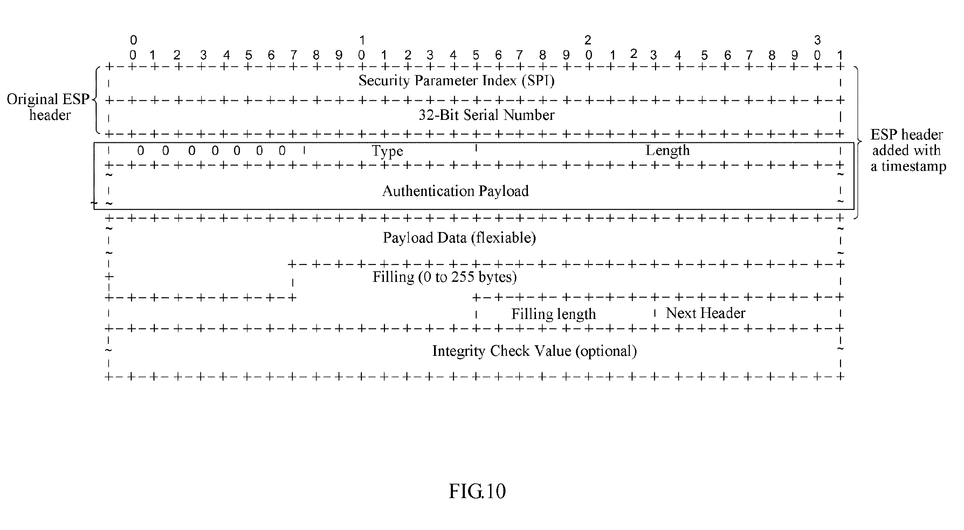

Fig. 10 illustrates a schematic diagram of an ESP header format that carries message identifier information, wherein the field Type may include 4 or 8 bits, e.g., the type of the timestamp may be marked as 1, i.e., Type=1. The field Length identifies a length of content under timestamp integrity protection but without encryption protection. The range of the plaintext can be more explicitly identified by increasing the field Length, which may include 8 or 16 bits. The Authentication Payload includes a value of authentication payload (e.g., a timestamp), an authentication algorithm or identifier and a timestamp integrity check value.

The content from the payload data to the next header is the content under encryption protection in the original ESP payload.

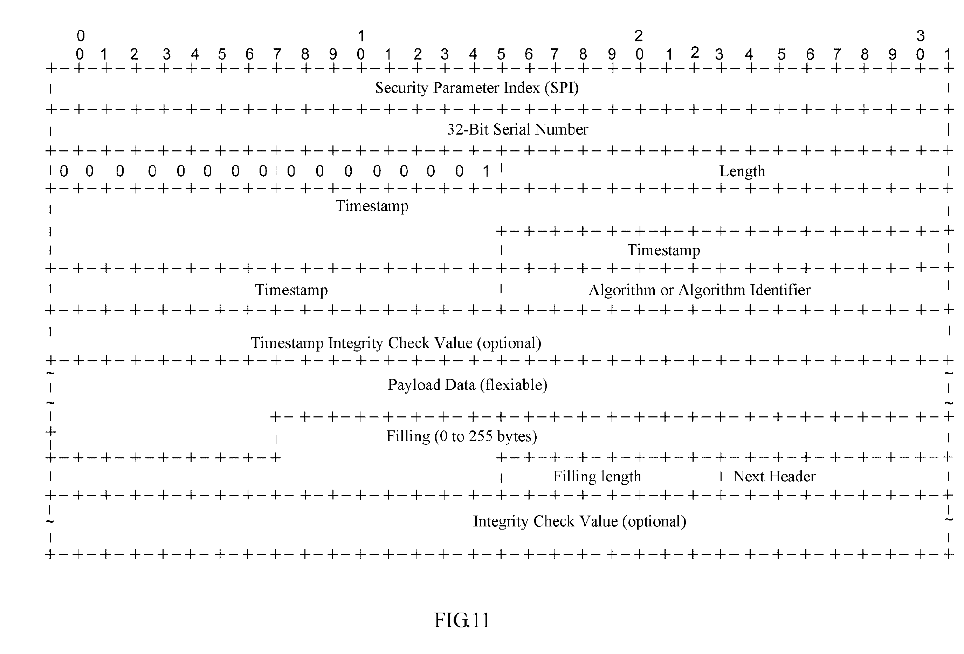

Fig. 11 illustrates a schematic diagram of an ESP header format that carries a timestamp, wherein the value of the field Type is 1, i.e., Type=1; the two sub-fields of the field Timestamp, i.e., secondsField and nanosecondsField, include 32 bits and 10 bytes, respectively; the field Algorithm or Algorithm Identifier includes 16 or 32 bits; and the timestamp Integrity Check Value (ICV) (optional) is related to the specific integrity check algorithm.

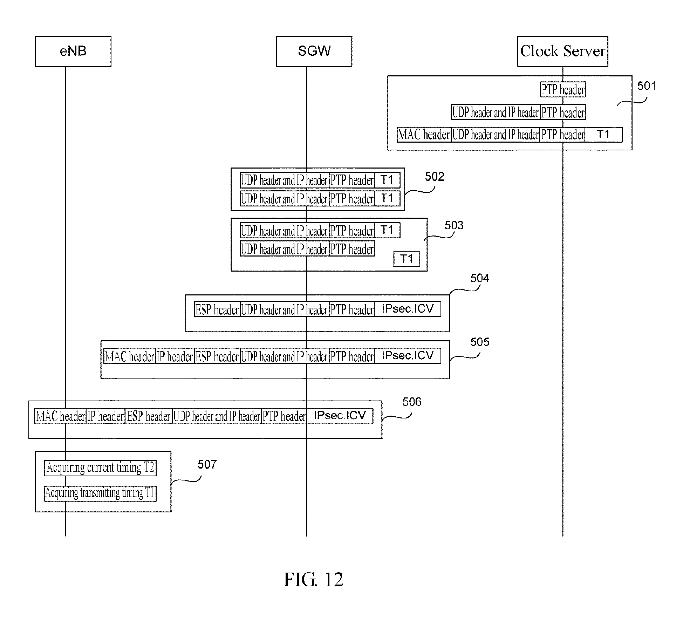

Fig. 12 illustrates a flowchart of Embodiment 4 of a time message processing method according to the present invention, wherein the identifier information not encrypted with the IPsec is carried in an ESP header in a message. The method specifically includes:
Steps 501-503: the same as steps 301-303, respectively;
Step 504: an SGW carries T1 in an ESP header which is not encrypted with the IPsec in the message;
Step 505: the SGW performs an MAC layer processing for the message to add an MAC header to the message;
Step 506: the SGW transmits the message to an eNB;
Step 507: the eNB determines whether the received message is an event message based on the ESP header of the message which is not encrypted with the IPsec, and if so, performs a timestamp integrity check and a message integrity check according to the information in the ESP header and the IP packet. The eNB may also perform the timestamp integrity check and the message integrity check for the time message, after receiving the time message and before determining whether it is an event message.

In the embodiment as illustrated in Fig. 12, the identifier information is carried in an ESP header of a message, and the eNB can determine whether the message is an event message once it is received. When the message is an event message, the current timing is acquired and taken as the receiving timing of the message, rather than acquiring receiving timings of all the messages, thereby improving the network performance.

### 3. The identifier information not encrypted with the IPsec is carried in the ESP header having sub-formats

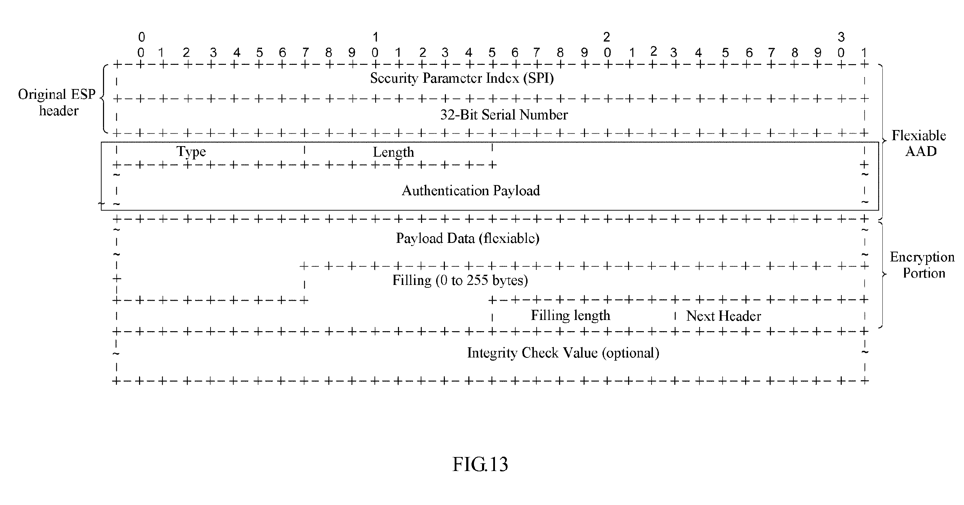

Fig. 13 illustrates a schematic diagram of an ESP header having sub-formats. The ESP header includes a flexible AAD and an encrypted part, the flexible AAD defines SPI, SQN, Type, Length and Authentication Payload, and the encrypted part that includes Payload Data, Padding, Pad length and Next Header, which all come from the ESP payload. The ESP header also includes a Timestamp Integrity Check Value (ICV).

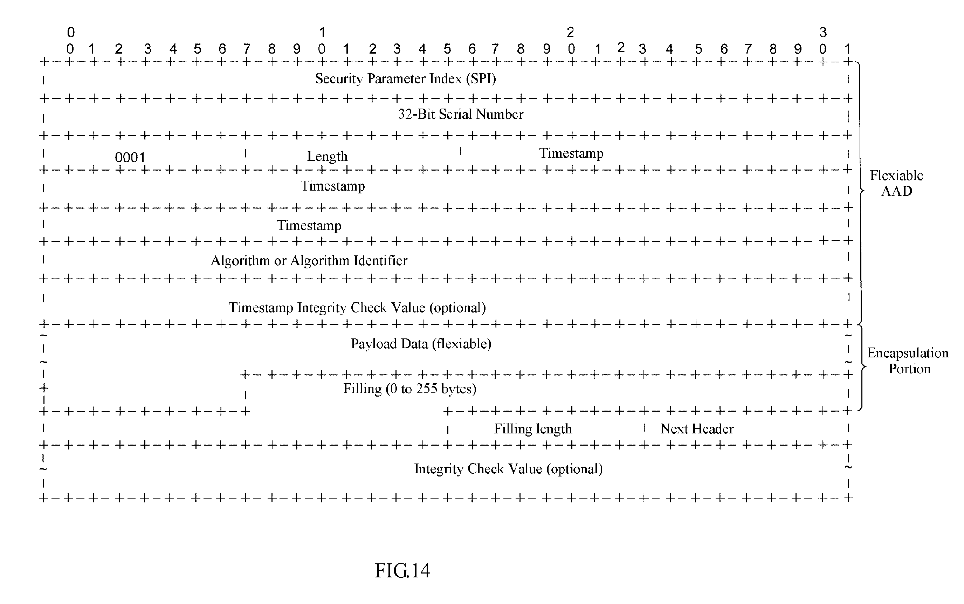

When Type=1, the message identifier information is a timestamp. Fig. 14 illustrates a schematic diagram of an ESP header that carries a timestamp and has sub-formats. For the ESP header, when there is no other extended content in addition to the SPI and the SQN, the value of the field Type is set as maximum or invalid (all 1), the value of the field Length is all 0, and the length of the field Authentication Payload is 0 (the field Type may also be set as all 0, or other special identifying method may be adopted). When there is any other message identifier information, the values of the fields Type and Length may be non-zero.

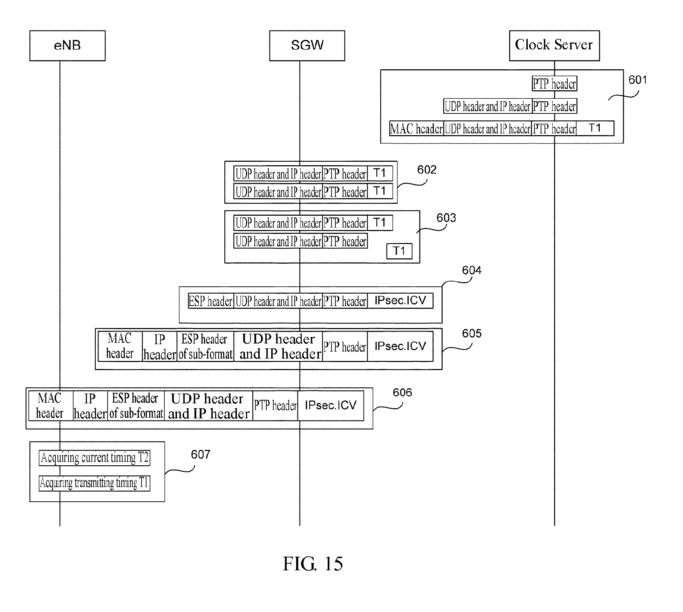

Fig. 15 illustrates a flowchart of Embodiment 5 of a time message processing method according to the present invention, wherein the Type identifier not encrypted with the IPsec is carried by an ESP header with sub-formats in the message. The method specifically includes:
Steps 601-603: the same as steps 301-303, respectively;
Step 604: an SGW carries T1 in an ESP header which is not encrypted with the IPsec and has sub-formats in the message;
Step 605: the SGW performs an MAC layer processing for the message to add an MAC header;
Step 606: the SGW transmits the message to an eNB;
Step 607: the eNB determines whether the received message is an event message based on the ESP header of the message which is not encrypted with the IPsec and has sub-formats, and if so, performs a timestamp integrity check and a message integrity check according to the information in the ESP header having sub-formats and the IP packet, so as to acquire the current timing T2 and take it as the receiving timing of the message. The eNB may also perform the timestamp integrity check and the message integrity check for the time message, after receiving the time message and before determining whether it is an event message.

In the embodiment as illustrated in Fig. 15, the identifier information is carried in an ESP header having sub-formats, and the eNB can determine whether the message is an event message once it is received. When the message is an event message, the current timing is acquired and taken as the receiving timing of the message, rather than acquiring receiving timings of all messages, thereby improving the network performance.

### 4. The identifier information not encrypted with the IPsec is carried in the IPv6 extended header

RFC2460 defines multiple extended headers for the IPv6, these extended headers provide support for multiple applications and it is also possible to extend new applications. Each of the IPv6 extended headers includes a field "Next Header". In the IPv6 datagram, the extended headers are arranged between the IPv6 header and the upper layer header, and each of the extended headers is uniquely identified by the field "Next Header" of the previous header. None of the extended headers except for the Hop by Hop header will be processed unless the message arrives at the node. The destination node determines whether to process a next extended header according to the content and semantics of each extended header, and it must process those extended headers according to their sequence.

In RFC2460, when multiple extended headers are used, their order is IPv6 header, Hop by Hop options header, Destination Options header, Routing header, Fragment header, Authentication header, ESP header and upper-layer header.

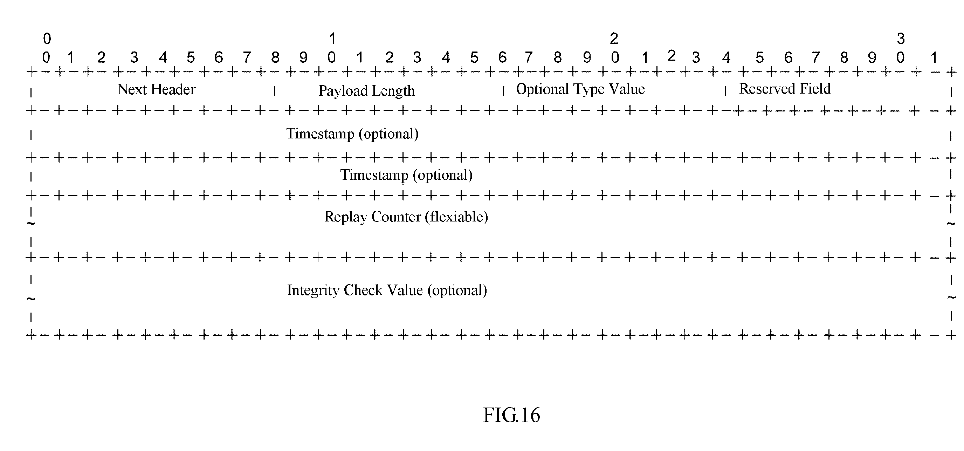

Fig. 16 illustrates a schematic diagram of an IPv6 extended header format that carries a timestamp.

The field "Next header" identifies the next payload type of the IPv6 extended header that carries the timestamp.

The extended header may include the fields such as Next header, Payload Length, Option Type, Reserved, Timestamp (secondsField) and Timestamp (nanosecondsField), Replay Counter and ICV.

The field Option Type identifies the type of the message identifier information, and if a timestamp is carried, the value of the field may be 1.

The field Reserved is set as 0 when not being used.

The field Timestamp includes two sub-fields, i.e., Timestamp (secondsField) and Timestamp (nanosecondsField), which are both optional. When the timestamp is to be carried, the two sub-fields may be included in the IPv6 extended header. Timestamp (secondsField) is a 32-bit unsigned integer, and Timestamp (nanosecondsField) is defined as a 48-bit unsigned integer in IEEE1588V2 protocol, but Timestamp (nanosecondsField) may also be defined as 64-bit.

The Replay Counter is a unidirectional counter for an anti-replay function.

The IPv6 extended header carrying a timestamp may be arranged before the ESP header, so that the carried timestamp only undergoes an integrity protection without being encrypted with the IPsec, thus the receiver can identify whether the message is an time message based on the timestamp not encrypted with the IPsec.

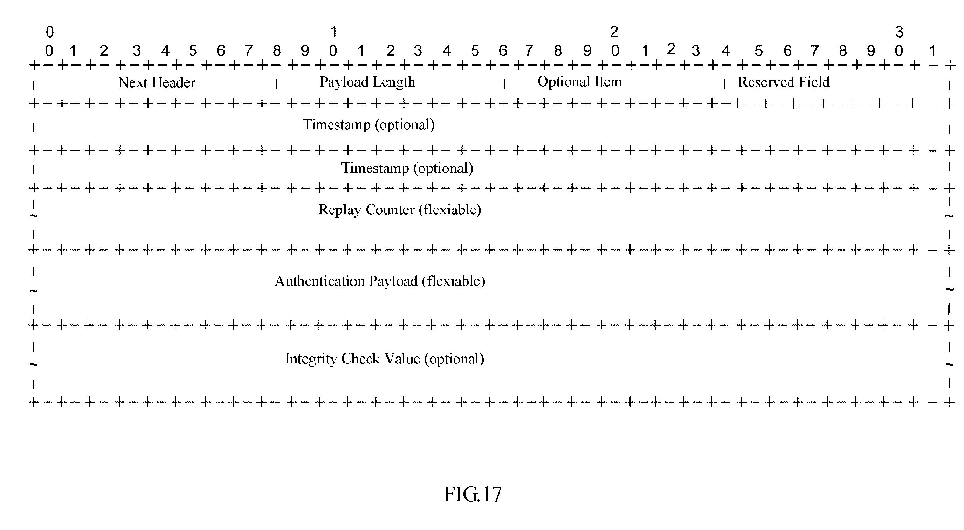

Fig. 17 illustrates a schematic diagram of another IPv6 extended header format that carries a timestamp. As compared with the format in Fig. 16, the format in Fig. 17 is added with a field Authentication payload that carries an integrity check algorithm or an algorithm identifier.

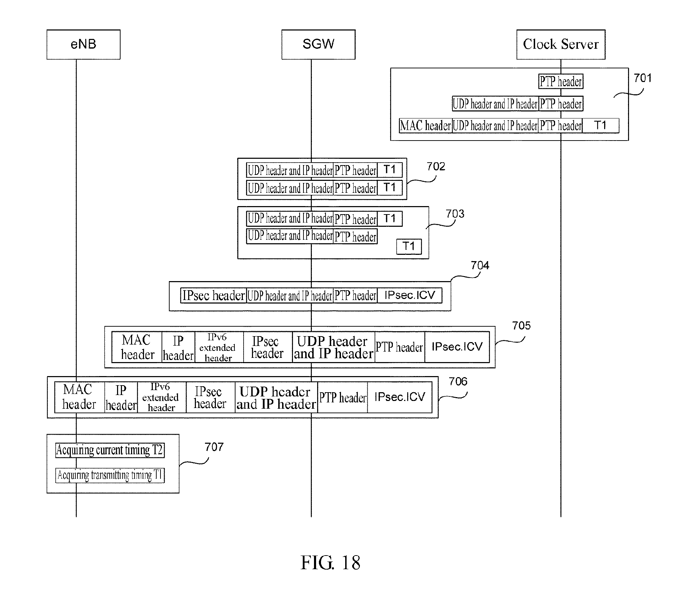

Fig. 18 illustrates a flowchart of Embodiment 6 of the time message processing method according to the present invention, wherein the identifier information not encrypted with the IPsec is carried by an IPv6 extended header in the message. The method specifically includes:
Steps 701-703: the same as steps 301-303, respectively;
Step 704: an SGW adds an IPsec header to the message;
Step 705: the SGW performs an MAC layer processing for the message by adding an MAC header, and carries T1 in an IPv6 extended header of the message which is not encrypted with the IPsec;
Step 706: the SGW transmits the message to an eNB;
Step 707: the eNB determines whether the received message is an event message based on the IPv6 extended header of the message which is not encrypted with the IPsec, and if so, performs a timestamp integrity check according to the information in the IPv6 extended header and the IP packet, and records a timing T2 at which the message is received. The eNB may also perform a timestamp integrity check for the time message, after receiving the time message and before determining whether it is an event message

In the embodiment as illustrated in Fig. 18, identifier information is carried in an IPv6 extended header of the message, and the eNB can determine whether the message is an event message once it is received. When the message is an event message, the current timing is acquired and taken as the receiving timing of the message, rather than acquiring receiving timings of all messages, thereby improving the network performance.

### Scenario 2: the eNB directly establishes an IPsec connection with the clock server

In various embodiments of the present invention, the identifier information is a plaintext not encrypted with the IPsec, and can be carried in an AAD, an ESP header or an IPv6 extended header.

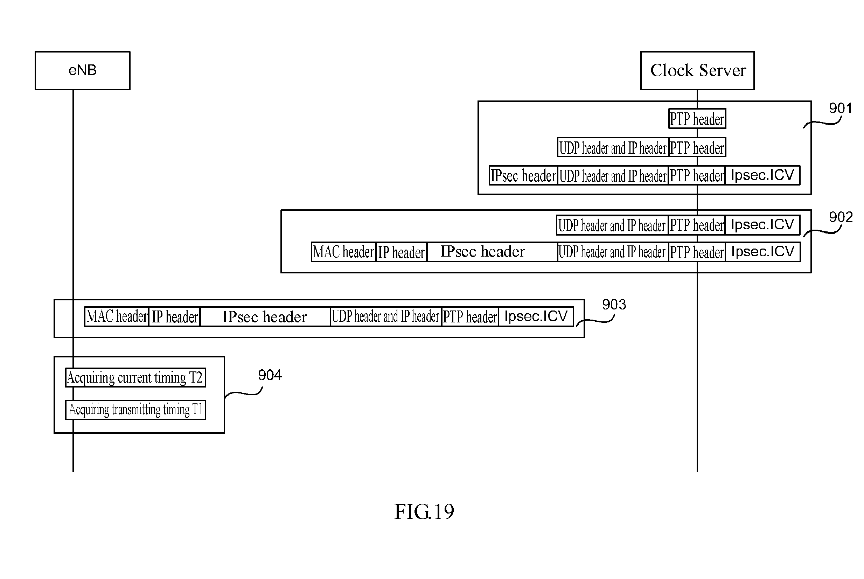

Fig. 19 illustrates a flowchart of Embodiment 8 of a time message processing method according to the present invention, including:
Step 901: a clock server performs an IP layer processing for the message, i.e, adding an IP header and a UDP header to the message to be transmitted, and performing an IPsec encryption and an integrity protection;
Step 902: the clock server carries T1 in an AAD not encrypted with the IPsec, and performs an identifier information integrity protection for the message;
Step 903: the clock server transmits the message to an eNB;
Step 904: after receiving the message, the eNB determines whether it is an event message according to the AAD of the message which is not encrypted with the IPsec, and if so, performs a timestamp integrity check and a message integrity check according to the information in the AAD and the IP packet, so as to acquire the current timing T2. The eNB may also perform a timestamp integrity check and a message integrity check for the time message, after receiving the time message and before determining whether it is an event message.

The AAD format may be as illustrated in Fig. 5 or 6.

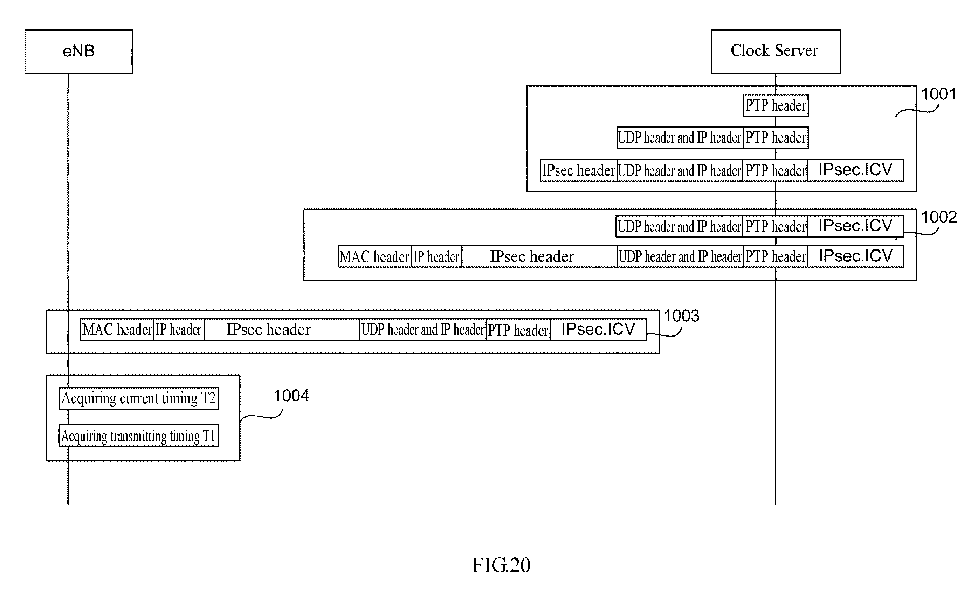

Fig. 20 illustrates a flowchart of Embodiment 9 of a time message processing method according to the present invention, including:
Step 1001: a clock server performs an IP layer processing for the message, i.e, adding an IP header and a UDP header to the message to be transmitted, and performing an IPsec encryption and an integrity protection for the message;
Step 1002: the clock server carries T1 in an ESP header not encrypted with the IPsec, and performs an identifier information integrity protection for the message;
Step 1003: the clock server transmits the message to an eNB;
Step 1004: after receiving the message, the eNB determines whether it is an event message according to the ESP header of the message which is not encrypted with the IPsec, and if so, performs a timestamp integrity check and a message integrity check according to the information in the ESP header and the IP packet, so as to acquire the current timing T2 and take it as the receiving timing of the message. The eNB may also perform a timestamp integrity check and a message integrity check for the time message, after receiving the time message and before determining whether it is event message.

In step 1002, the ESP header may have specific identifier such as all 1 or all 0, indicating that the ESP header carries identifier information. Alternatively, the ESP header may have sub-formats, thus any specific identifier is not necessarily included.

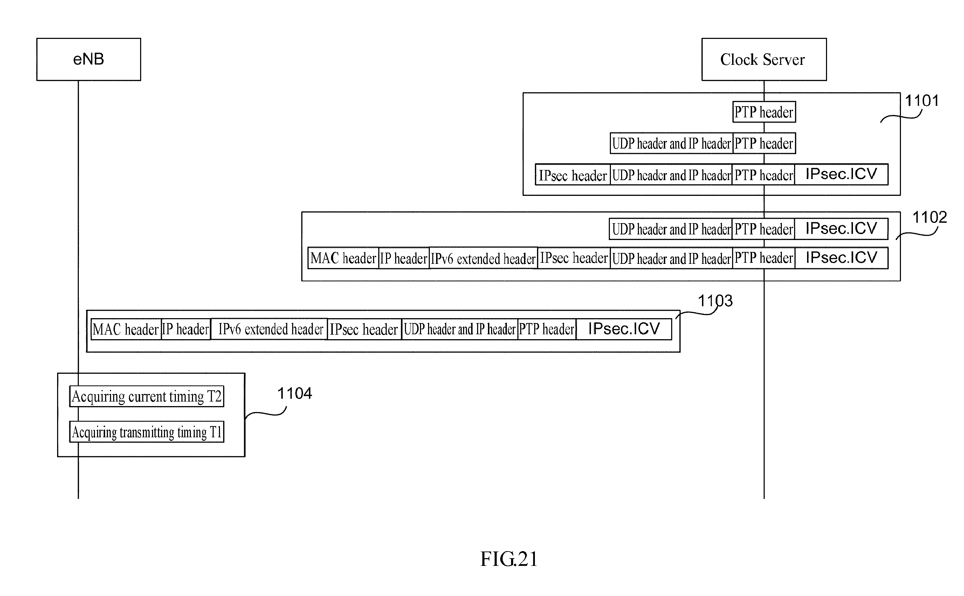

Fig. 21 illustrates a flowchart of Embodiment 10 of a time message processing method according to the present invention, including:
Step 1101: a clock server performs an IP layer processing for the message, i.e, adding an IP header and a UDP header to the message to be transmitted, and performing an IPsec encryption and an integrity protection for the message;
Step 1102: the clock server carries T1 in an IPv6 extended header not encrypted with the IPsec, and performs an identifier information integrity protection for the message;
Step 1103: the clock server transmits the message to an eNB;
Step 1104: after receiving the message, the eNB determines whether it is an event message according to the IPv6 extended header of the message which is not encrypted with the IPsec, and if so, performs a timestamp integrity check and a message integrity check according to the information in the IPv6 extended header and the IP packet, so as to acquire the current timing T2 and take it as the receiving timing of the message. The eNB may also perform a timestamp integrity check and a message integrity check for the time message, after receiving the time message and before determining whether it is an event message.

In the embodiment as illustrated in Fig. 19, 20 or 21, the timestamp information may be carried by the AAD and the ESP header. However, the clock server performs a message integrity protection before the addition of the timestamp to the message, i.e., it calculates an integrity check value IPsec.ICV, and adds the IPsec.ICV to the message, while the datagram received by the eNB is a message containing timestamp information (timestamp information located in the AAD or the ESP header). When the eNB calculates the IPsec.ICV according to the timestamp information and other related information, if the calculated IPsec.ICV is different from the existing IPsec.ICV in the message, then the message integrity check at the receiver will fail.

In order to solve the above problem, the following solution may be adopted: after receiving an event message, an eNB extracts the received timestamp, and performs an integrity check for the time message using the input content the same as that employed by the transmitter (i.e., the clock server) for an integrity protection of the time message. Since the transmitter and the receiver of the time message use the same input content to calculate the IPsec.ICV, an integrity check failure caused by different input contents can be avoided.

In order to protect the integrity of the time message, some input contents (including the information such as algorithm) may be used to calculate the IPsec.ICV. During the transmission of the time message, it is necessary to perform an integrity check to avoid threats such as tampering.

Further, in the embodiment as illustrated in Fig. 19, 20 or 21, after performing IPsec encryption for the time message to be transmitted, the clock server adds a timestamp to the message. In the embodiment of the present invention, the timestamp is carried in an AAD, an ESP header or an IPv6 extended header which is not encrypted with the IPsec, thereby overcoming the problem that the clock server cannot determine the place for carrying the timestamp after the message is encrypted with the IPsec.

In the various embodiments described above, the clock server transmits a message to the eNB, and the eNB can perform frequency synchronization with the clock server according to the transmitting timing T1 and the receiving timing T2 of the message.

The method for the eNB to perform time synchronization with the clock server may be as follows:
Four types of messages are defined in IEEE1588V2, i.e., Sync, Follow_UP, Delay_Req and Delay_Resp.

Fig. 8 illustrates a flowchart of time synchronization between an eNB and a clock server, including:
Step 401: the clock server transmits to the eNB a Sync message that carries a transmitting timing T1 of the Sync message; since it is an event message, the eNB acquires a receiving timing T2 thereof;
Step 402: the eNB, at a timing T3, transmits to the clock server a Delay_Req message that carries the transmitting timing T3 of the Delay_Req message , and the clock server receives the Delay_Req message at a timing T4; since it is an event message, the clock server acquires the receiving timing T4 thereof;
Step 403: the clock server transmits a Delay_Resp message to the eNB;

The time offset between the eNB and the clock server is (T2-T1-T4+T3) /2, and the eNB can perform time synchronization with the clock server according to the time offset.

As can be seen from the above time synchronization process, in order to perform time synchronization with the clock server, the eNB shall acquire T3 and T4 as well as T1 and T2, and the method for acquiring T3 and T4 can be similar to the method for acquiring T1 and T2.

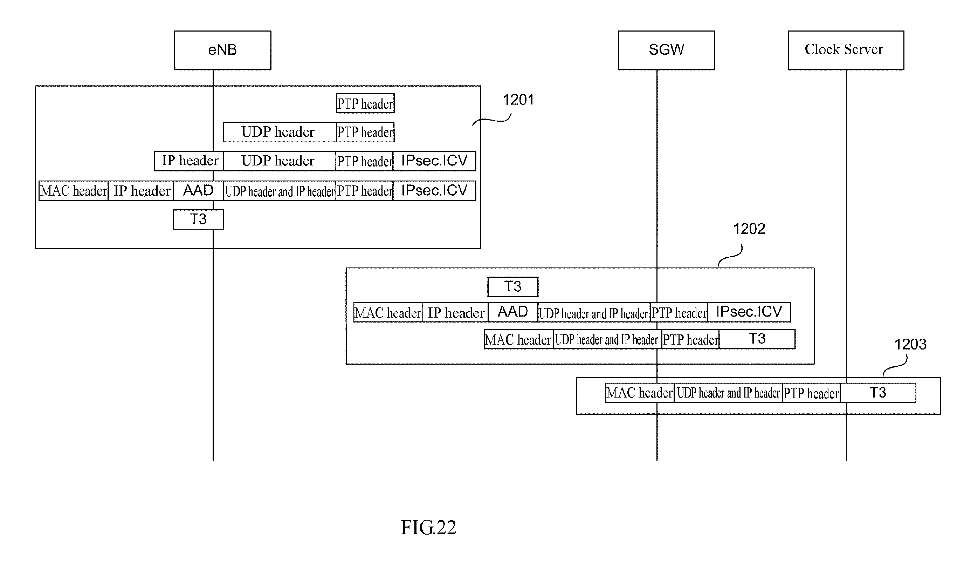

Fig. 22 illustrates a flowchart of Embodiment 11 of a time message processing method according to the present invention, wherein an eNB establishes an IPsec connection with a clock server through a SGW. The method specifically includes:
Step 1201: the eNB performs an IP layer processing, an integrity protection and an encryption protection for a message; carries a transmitting timing T3 of the message in the message, specifically in an AAD, an ESP header or an IPv6 extended header; and transmits the message to the SGW.
   In step 1201, the eNB carries the timestamp T3 in the message after encrypting the message with the IPsec, thereby overcoming the problem that the eNB cannot determine the place for carrying the timestamp after the message is encrypted with the IPsec.
Step 1202: after receiving the message, the SGW determines whether it is an event message based on T3 in the AAD not encrypted with the IPsec, extracts or copies the transmitting timing T3 of the message from the AAD, the ESP header or the IPv6 extended header, puts T3 in the message, and transmits the message to the clock server in the form of plaintext.
Step 1203: after receiving the message, the clock server performs a message integrity check, and if succeeds, acquires a receiving timing T4 of the message. Next, the clock server may transmit the timing T4 to the eNB.

As can be seen from the schematic diagram of a time synchronization method illustrated in Fig. 8, when acquiring T1 and T2, the eNB receives the Sync message, and when acquiring T3 and T4, the eNB transmits the Delay_Req message to the clock server. After acquiring T4, the clock server may carry T4 in the Delay_Resp message and transmit the Delay_Resp message to the eNB. Since the Delay_Req message is transmitted by the eNB, the eNB can acquire T3.

After acquiring T1, T2, T3 and T4, the eNB can calculate the time offset, and perform time synchronization with the clock server.

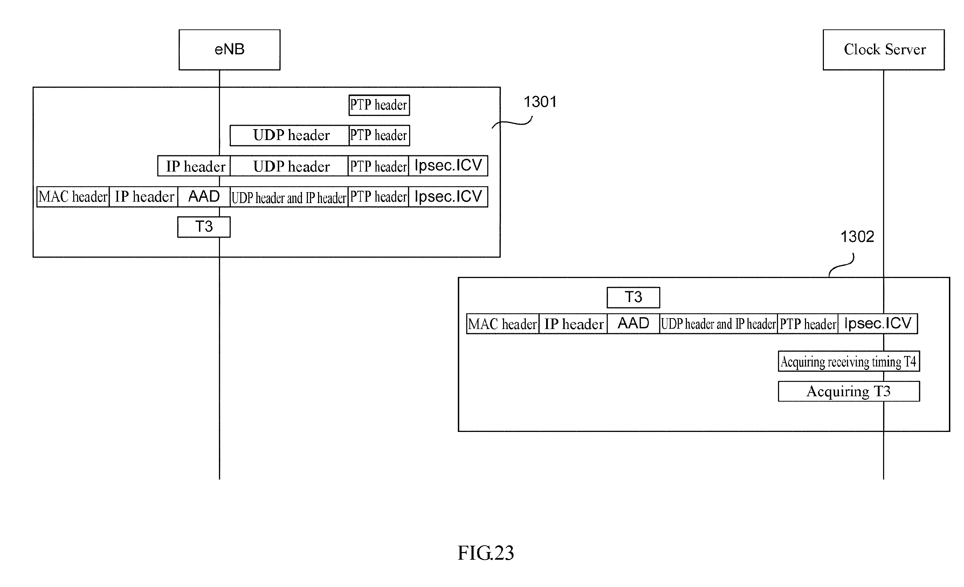

Fig. 23 illustrates a flowchart of Embodiment 12 of a time message processing method according to the present invention, wherein an eNB directly establishes an IPsec connection with a clock server. The method specifically includes:
Step 1301: the eNB performs an IP layer processing, an integrity protection and an IPsec encryption protection for the message; carries a transmitting timing T3 of the message in the message, specifically in an AAD, an ESP header or an IPv6 extended header; and transmits the message to the clock server.
Step 1302: after receiving the message, the clock server determines whether it is an event message based on T3 in the AAD, the ESP header or the IPv6 extended header which is not encrypted with the IPsec, performs a message integrity check, and if succeeds, acquires a receiving timing T4 of the message. Next, the clock server may transmit the timing T4 to the eNB. The clock server may also perform a timestamp integrity check and a message integrity check for the time message, after receiving the time message and before determining whether it is an event message.

In order to solve the problem in the prior art, the present invention further provides an embodiment, in which after receiving a time message, an eNB or a clock server acquires a receiving timing of the time message regardless of whether it is an event message; then determines whether the time message is an event message according to the identifier information therein, and if so, the receiving timing acquired when receiving the time message may be applied to the subsequent calculations of time synchronization or frequency synchronization; if not, the receiving timing acquired when receiving the time message may be discarded. Thus, the resources required for maintaining and managing the receiving timing can be partially saved, thereby improving the network performance as compared with the prior art.

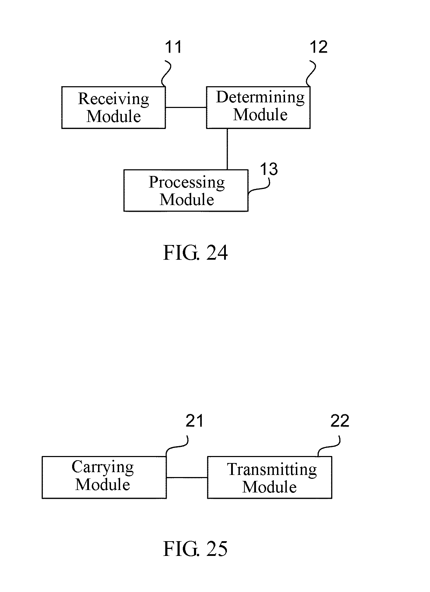

Fig. 24 illustrates a structure diagram of an embodiment of a time message processing apparatus of a transmitter according to the present invention. The apparatus includes a receiving module 11 and a determining module 12. The receiving module 11 is configured to receive a time message. The determining module 12 is connected to the receiving module 11 and configured to determine whether the time message received by the receiving module 11 is an event message according to identifier information carried in a field of the time message which is not encrypted with the IPsec.

In the apparatus provided by the embodiment, after the receiving module receives a time message, the determining module determines whether the time message is an event message according to identifier information carried in a field of the time message which is not encrypted with the IPsec, thereby solving the problem that the receiver of the time message cannot determine whether the time message is an event message.

On the basis of the technical solution of the embodiment as illustrated in Fig. 24, the apparatus may further include a processing module 13 which is connected to the determining module 12 and configured to acquire a current timing when the determining module 12 determines that the time message received by the receiving module 11 is an event message, and take the current timing as a timing at which the receiving module 11 receives the time message.

The processing module 13 may be further configured not to acquire the current timing when the determining module 12 determines that the time message received by the receiving module 11 is not an event message.

The determining module 12 specifically may be configured to determine whether the time message received by the receiving module 11 is an event message according to the identifier information in an AAD, an ESP header or an IPv6 extended header of the time message which is not encrypted with the IPsec. Specifically, the determining module 12 may be configured to determine that the time message is an event message according to a timestamp, in the case when the identifier information of the time message received by the receiving module 11 includes the timestamp; or determine that the time message is an event message according to a preset UDP port number, when the identifier information of the time message received by the receiving module 11 includes the preset UDP port number; or determine that the time message is an event message according to a preset message type, when the identifier information of the time message received by the receiving module 11 includes the message type. The method for the determining module 12 to determine whether the time message is an event message may refer to the aforementioned embodiment, e.g., the description of step 102.

The apparatus as illustrated in Fig. 24 may further include a check module (not shown) configured to perform an integrity check for the identifier information in the time message received by the receiving module 11, after the determining module determines that the time message received by the receiving module 11 is an event message and before the processing module 13 acquires the current timing. Alternatively, the check module may be configured to perform an integrity check for the identifier information in the time message after the receiving module 11 receives the time message and before the determining module 12 determines that the time message is an event message.

The check module may be further configured to perform an integrity check for the time message using an input content the same as that employed by the transmitter of the time message for an integrity protection of the time message, after the determining module 12 determines whether the time message received by the receiving module 11 is an event message and before the processing module 13 acquires the current timing. Alternatively, the check module may be further configured to perform an integrity check for the time message using an input content the same as that employed by the transmitter of the time message for an integrity protection of the time message, after the receiving module 11 receives the time message and before the determining module 12 determines whether the time message is an event message.

In the embodiment as illustrated in Fig. 24, detailed operation methods of various modules may refer to the descriptions of the aforementioned method embodiment.

Fig. 25 illustrates a structure diagram of an embodiment of a time message processing apparatus of a receiver according to the present invention. The apparatus includes a carrying module 21 and a transmitting module 22. The carrying module 21 is configured to carry identifier information in a time message encrypted with the IPsec, and the identifier information is carried in a field of the time message which is not encrypted with the IPsec. The transmitting module 22 is connected to the carrying module 21 and configured to transmit the time message processed by the carrying module 21.

The carrying module 21 specifically may be configured to carry the identifier information which is not encrypted with the IPsec in an AAD, an ESP header or an IPv6 extended header of the time message. Specifically, the carrying module 21 may copy or extract the identifier information of the time message from the time message to be transmitted, and carry the identifier information in the AAD, the ESP header or the IPv6 extended header.

In the embodiment as illustrated in Fig. 25, the implementations for various modules may refer to the descriptions of the aforementioned method embodiment.

The embodiment of the present invention further provides a time message processing system, which may include the time message processing apparatuses of the transmitter and the receiver in the aforementioned embodiment.

In the embodiments as illustrated in Figs. 19, 20 and 21, a connection is directly established between the eNB and the clock server, and both of them can transmit the time message. Thus, the time message processing apparatus of the transmitter is a time message server, and the time message processing apparatus of the receiver is an eNB. Alternatively, the time message processing apparatus of the transmitter is an eNB, and the time message processing apparatus of the receiver is an event server.

In the embodiments as illustrated in Figs. 7, 12, 15 and 18, the eNB establishes a connection with the clock server through an SGW, thus the time message processing apparatus of the transmitter is the SGW, and the time message processing apparatus of the receiver is the eNB.

In the time message processing apparatus and system provided by the embodiment of the present invention, the receiving module can directly determine whether a received time message is an event message without any decryption, according to the identifier information carried in a field of the time message which is not encrypted with the IPsec, thereby solving the problem that the receiver of the time message cannot determine whether the received time message is an event message, and improving the network performance since decryption is not required.

In the apparatus provided by the embodiment of the present invention, if the time message is an event message, the processing module acquires the current timing and takes it as the receiving timing of the time message. If the time message is not an event message, the processing module does not need to acquire the current timing as the receiving timing of the time message, so as to reduce the resources required for storing and maintaining the receiving timing of the time message, thereby reducing the burden of the receiver of the time message, and improving the network performance.

A person skilled in the art will appreciate that all or a part of steps for implementing the above method embodiments may be completed by instructing relevant hardware through a program that may be stored in a computer readable storage medium, and when being executed, the program performs the steps including the above method embodiments. The storage medium may include various mediums capable of storing program codes, such as ROM, RAM, magnetic disk and optical disk.

Finally to be noted, the above embodiments are just used to describe the technical solutions of the present invention rather than making limitations thereto. Although the present invention is detailedly described with reference to the above embodiments, a person skilled in the art shall appreciate that the technical solutions described in the above embodiments still can be modified, or some technical features thereof can be equivalently replaced, without causing the essences of corresponding technical solutions deviate from the spirit and range of the technical solutions of respective embodiments of the present invention.

## Claims

1. A time message processing method, comprising:
receiving a time message transmitted from a transmitter; and
determining whether the time message is an event message according to identifier information in the time message, wherein the identifier information is the information carried in a field which is not encrypted with an Internet protocol security (IPsec) by the transmitter.

2. The method according to claim 1, further comprising: if the time message is an event message, acquiring a current timing and taking it as a receiving timing of the time message.

3. The method according to claim 1 or 2, further comprising: if the time message is not an event message, not acquiring a current timing.

4. The method according to claim 1 or 2, wherein the event message comprises an event message of a precision clock synchronization protocol for networked measurement and control systems, or an event message of a network time protocol.

5. The method according to claim 1 or 2, wherein determining whether the time message is an event message according to the identifier information in the time message comprises:
if the identifier information in the time message comprises a timestamp, determining that the time message is an event message; or
if the identifier information in the time message comprises a preset User Datagram Protocol (UDP) port number, determining that the time message is an event message; or
if the identifier information of the time message comprises a preset message type, determining that the time message is an event message.

6. The method according to claim 1 or 2, wherein the field which is not encrypted with the IPsec is carried by an Additional Authentication Data (AAD), an Encapsulating Security Payload (ESP) header or an Internet protocol version 6 (IPv6) extended header.

7. The method according to claim 6, wherein the ESP header has sub-formats or carries specific identifier indicating that the ESP header carries the identifier information.

8. The method according to claim 2, wherein after determining that the time message is an event message and before acquiring the current timing, the method further comprises performing an integrity check for the identifier information in the time message; or
after receiving the time message transmitted from the transmitter and before determining whether the time message is an event message, the method further comprises performing an integrity check for the identifier information in the time message.

9. The method according to claim 2, wherein after determining that the time message is an event message and before acquiring the current timing, the method further comprises performing an integrity check for the time message using an input content the same as that used by the transmitter of the time message for an integrity protection of the time message; or
after receiving the time message transmitted from the transmitter and before determining whether the time message is an event message, the method further comprises: performing an integrity check for the time message using an input content the same as that used by the transmitter of the time message for an integrity protection of the time message.

10. A time message processing method, comprising:
carrying identifier information in a time message encrypted by an Internet protocol security (IPsec), wherein the identifier information is carried by a field of the time message which is not encrypted with the IPsec; and
transmitting the time message.

11. The method according to claim 10, wherein the identifier information at least comprises one of a timestamp, a User Datagram Protocol (UDP) port number and a message type.

12. The method according to claim 10 or 11, wherein the field which is not encrypted with the IPsec is carried by an Additional Authentication Data (AAD), an Encapsulating Security Payload (ESP) header or an Internet protocol version 6 (IPv6) extended header.

13. The method according to claim 12, wherein the ESP header has sub-formats or carries specific identifier indicating that the ESP header carries the identifier information.

14. The method according to claim 13, further comprising: performing an integrity protection for the identifier information in the time message, or performing an integrity protection for the time message, after carrying the identifier information in the time message encrypted with the IPsec; or
performing an integrity protection for the time message before carrying the identifier information in the time message encrypted with the IPsec, and performing an integrity protection for the identifier information in the time message after carrying the identifier information in the time message encrypted with the IPsec.

15. A time message processing apparatus of a receiver, comprising:
a receiving module, configured to receive a time message; and
a determining module, configured to determine whether the time message received by the receiving module is an event message, according to identifier information carried in a field of the time message which is not encrypted by an Internet protocol security (IPsec).

16. The apparatus according to claim 15, further comprising: a processing module, configured to acquire a current timing when the determining module determines that the time message received by the receiving module is an event message, and take the current timing as a receiving timing of the time message.

17. The apparatus according to claim 16, wherein the processing module is further configured not to acquire the current timing when the determining module determines that the time message received by the receiving module is not an event message.

18. The apparatus according to any of claims 15 to 17, wherein the determining module is specifically configured to determine whether the time message received by the receiving module is an event message, according to the identifier information in an Additional Authentication Data (AAD), an Encapsulating Security Payload (ESP) header or an Internet protocol version 6 (IPv6) extended header of the time message which is not encrypted with the IPsec.

19. The apparatus according to any of claims 15 to 17, wherein the determining module is specifically configured to determine that the time message is an event message according to a timestamp, when the identifier information of the time message received by the receiving module comprises the timestamp; or determine that the time message is an event message according to a preset UDP port number, when the identifier information of the time message received by the receiving module comprises the UDP port number; or determine that the time message is an event message according to a preset message type, when the identifier information of the time message received by the receiving module comprises the message type.

20. The apparatus according to claim 17, further comprising a check module, configured to perform an integrity check for the identifier information in the time message, after the determining module determines that the time message received by the receiving module is an event message and before the processing module acquires the current timing; or perform an integrity check for the identifier information in the time message after the receiving module receives the time message and before the determining module determines that the time message is an event message.

21. The apparatus according to claim 20, wherein the check module is further configured to perform an integrity check for the time message using an input content the same as that used by the transmitter of the time message for an integrity protection of the time message, after the determining module determines that the time message received by the receiving module is an event message and before the processing module acquires the current timing; or configured to perform an integrity check for the time message using an input content the same as that employed by the transmitter of the time message for an integrity protection of the time message, after the receiving module receives the time message and before the determining module determines that the time message is an event message.

22. A time message processing apparatus of a transmitter, comprising:
a carrying module, configured to carry identifier information in a time message encrypted with an Internet protocol security (IPsec), wherein the identifier information is carried in a field of the time message which is not encrypted with the IPsec; and
a transmitting module, configured to transmit the time message processed by the carrying module.

23. The apparatus according to claim 22, wherein the carrying module is specifically configured to carry the identifier information which is not encrypted with the IPsec in an AAD, an ESP header or an IPv6 extended header of the time message.

24. A time message processing system, comprising the time message processing apparatus of the transmitter according to claim 22 or 23, and the time message processing apparatus of the receiver according to any of claims 15 to 21.

25. The system according to claim 24, wherein the time message processing apparatus of the transmitter is a time message server, and the time message processing apparatus of the receiver is an eNB; or
the time message processing apparatus of the transmitter is an eNB, and the time message processing apparatus of the receiver is an event server; or
the time message processing apparatus of the transmitter is a gateway, and the time message processing apparatus of the receiver is an eNB.
